(19) Europäisches Patentamt
European Patent Office
Office européen des brevets

(11) **EP 2 005 608 B1**

(12) **FASCICULE DE BREVET EUROPEEN**

(45) Date de publication et mention de la délivrance du brevet:
**06.01.2010 Bulletin 2010/01**

(21) Numéro de dépôt: **07726975.1**

(22) Date de dépôt: **16.03.2007**

(51) Int Cl.:
*H04B 1/69* $^{(2006.01)}$      *H04L 1/06* $^{(2006.01)}$

(86) Numéro de dépôt international:
**PCT/EP2007/052493**

(87) Numéro de publication internationale:
**WO 2007/107507 (27.09.2007 Gazette 2007/39)**

(54) **PROCÉDÉ DE CODAGE SPATIO-TEMPOREL POUR SYSTÈME DE COMMUNICATION BI-ANTENNE DE TYPE UWB IMPULSIONNEL**

VERFAHREN ZUR RÄUMLICH-ZEITLICHEN CODIERUNG FÜR EIN ZWEIANTENNEN-KOMMUNIKATIONSSYSTEM DES GEPULSTEN UWB-TYPS

METHOD OF SPATIO-TEMPORAL CODING FOR DUAL-ANTENNA COMMUNICATION SYSTEM OF PULSED UWB TYPE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité:  **21.03.2006  FR 0650976**

(43) Date de publication de la demande:
**24.12.2008   Bulletin 2008/52**

(73) Titulaire: **Commissariat à l'Energie Atomique
75015 Paris (FR)**

(72) Inventeur: **ABOU-RJEILY, Chadi
F-38054 Grenoble Cedex 9 (FR)**

(74) Mandataire: **Ilgart, Jean-Christophe
Brevalex
3, rue du Docteur Lancereaux
75008 Paris (FR)**

(56) Documents cités:
- **CHADI ABOU-RJEILY, NORBERT DANIELE, JEAN-CLAUDE BELFIORE: "Space-Time COding for Multiuser Ultra-Wideband Communications"[Online] 13 septembre 2005 (2005-09-13), XP002407955 Extrait de l'Internet: URL:http://www.comelec.enst.fr/~belfiore/U WB_MIMO.pdf> [extrait le 2006-11-16] cité dans la demande**
- **JEAN-CLAUDE BELFIORE: "The Golden Code: a 2*2 Full-Rate Space-Time Code with Nonvabishing Determinants" IEEE TRANSACTIONS ON INFORMATION THEORY, [Online] vol. 51, avril 2005 (2005-04), XP002407956 Extrait de l'Internet: URL:http:// ieeexplore.ieee.org/iel5/18/305 93/01412035.pdf? tp=&arnumber=1412035&isnum ber=30593> [extrait le 2006-11-17] cité dans la demande**

**Description**

**DOMAINE TECHNIQUE**

La présente invention concerne à la fois le domaine des télécommunications en ultra-large bande ou UWB (*Ultra Wide Band*) et celui des systèmes multi-antenne à codage spatio-temporel ou STC (*Space Time Coding).*

**ÉTAT DE LA TECHNIQUE ANTÉRIEURE**

Les systèmes de télécommunication sans fil de type multi-antenne sont bien connus de l'état de la technique. Ces systèmes utilisent une pluralité d'antennes à l'émission et/ou à la réception et sont dénommés, selon le type de configuration adoptée, MIMO (*Multiple Input Multiple Output*), MISO (*Multiple Input Single Output*) ou SIMO (*Single Input Multiple Output*). Par la suite nous emploierons le même terme MIMO pour couvrir les variantes MIMO et MISO précitées. L'exploitation de la diversité spatiale à l'émission et/ou à la réception permet à ces systèmes d'offrir des capacités de canal nettement supérieures à celles des systèmes mono-antenne classique (ou SISO pour Single Input Single Output). Cette diversité spatiale est généralement complétée par une diversité temporelle au moyen d'un codage spatio-temporel. Dans un tel codage, un symbole d'information à transmettre se trouve codé sur plusieurs antennes et plusieurs instants de transmission. On connaît deux grandes catégories de systèmes MIMO à codage spatio-temporel : les systèmes à codage en treillis ou STTC (*Space Time Trellis Coding*) et les systèmes à codage par blocs ou STBC (*Space Time Block Coding*). Dans un système à codage en treillis, le codeur spatio-temporel peut être vu comme une machine à états finis fournissant $P$ symboles de transmission aux $P$ antennes en fonction de l'état courant et du symbole d'information à coder. Le décodage à la réception est réalisé par un algorithme de Viterbi multidimensionnel dont la complexité augmente de manière exponentielle en fonction du nombre d'états. Dans un système à codage par blocs, un bloc de symboles d'information à transmettre est codé en une matrice de symboles de transmission, une dimension de la matrice correspondant au nombre d'antennes et l'autre correspondant aux instants consécutifs de transmission.

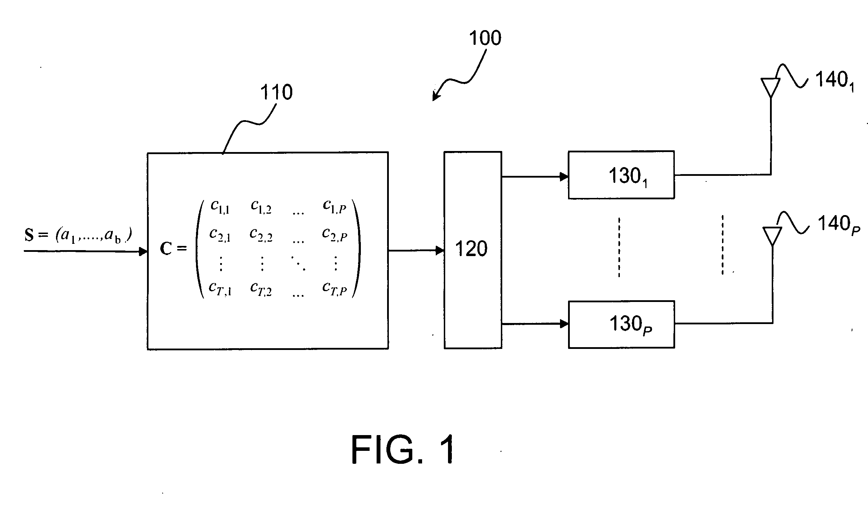

La Fig. 1 représente schématiquement un système de transmission MIMO 100 avec codage STBC. Un bloc de symboles d'information S=$(a_1,...,a_b)$ par exemple un mot binaire de b bits ou plus généralement de b symboles $M$-aires est codé en une matrice spatio-temporelle :

$$\mathbf{C} = \begin{pmatrix} c_{1,1} & c_{1,2} & ... & c_{1,P} \\ c_{2,1} & c_{2,2} & ... & c_{2,P} \\ \vdots & \vdots & \ddots & \vdots \\ c_{T,1} & c_{T,2} & ... & c_{T,P} \end{pmatrix} \qquad\qquad (1)$$

où les coefficients $c_{1,p}$, $t=1,..,T;p=1,..,P$ du code sont en règle générale des coefficients complexes dépendant des symboles d'information, $P$ est le nombre d'antennes utilisées à l'émission, $T$ est un entier indiquant l'extension temporelle du code, c'est-à-dire le nombre d'instants d'utilisation du canal ou PCUs (*Per Channel Use*).
La fonction $f$ qui à tout vecteur **S** de symboles d'information fait correspondre le mot de code spatio-temporel **C** est appelée fonction de codage. Si la fonction $f$ est linéaire on dit que le code spatio-temporel est linéaire. Si les coefficients $c_{1-p}$, sont réels le code spatio-temporel est dit réel.
Sur la Fig. 1, on a désigné par 110 un codeur spatio-temporel. A chaque instant d'utilisation de canal t, le codeur fournit au multiplexeur 120 le *t-ème* vecteur-ligne de la matrice **C.** Le multiplexeur transmet aux modulateurs $130_1,...,130_P$ les coefficients du vecteur ligne et les signaux modulés sont transmis par les antennes $140_1,...,140_P$.
Le code spatio-temporel est caractérisé par son débit, c'est-à-dire par le nombre de symboles d'information qu'il transmet par instant d'utilisation de canal (PCU). Le code est dit à plein débit s'il est $P$ fois plus élevé que le débit relatif à une utilisation mono-antenne (SISO).
Le code spatio-temporel est caractérisé en outre par sa diversité qui peut être définie comme le rang de la matrice **C.** On aura une diversité maximale si pour deux mots de code **C₁** et **C₂** quelconques correspondant à deux vecteurs **S₁** et **S₂,** la matrice **C₁-C₂** est de rang plein.
Le code spatio-temporel est enfin caractérisé par son gain de codage qui traduit la distance minimale entre différents mots du code. On peut le définir comme :

$$\min_{C_1 \neq C_2} \det\left((C_1 - C_2)^H (C_1 - C_2)\right) \qquad (2)$$

ou, de manière équivalente, pour un code linéaire :

$$\min_{C \neq 0} \det\left(C^H C\right) \qquad (3)$$

où det($C$) signifie le déterminant de $C$ et $C^H$ est la matrice conjuguée transposée de $C$. Pour une énergie de transmission par symbole d'information, le gain de codage est borné.

Un code spatio-temporel sera d'autant plus résistant à l'évanouissement que son gain de codage sera élevé.

Un exemple de codage spatio-temporel pour un système MIMO à deux antennes de transmission a été proposé dans l'article de J-C Belfiore et al. intitulé « The Golden code : a 2x2 full-rate space-time code with non-vanishing determinants » publié dans IEEE Transactions on Information Theory, vol. 51, N° 4, pages 1432-1436, Avril 2005.

Le code proposé, dit code d'or, est basé sur une double extension algébrique $K$ du corps des nombres rationnels $Q$ : $K = Q(i, \theta)$ où $i = \sqrt{-1}$ est racine du polynôme $X^2 + 1$ et $\theta$ est le nombre d'or $\theta = \dfrac{1 + \sqrt{5}}{2}$, racine du polynôme $X^2 - X - 1$. Le code d'or peut être représenté par la matrice suivante :

$$C_{gold} = \begin{pmatrix} \alpha(a_1 + \theta a_2) & \alpha(a_3 + \theta a_4) \\ i\alpha_1(a_3 + \theta_1 a_4) & \alpha_1(a_1 + \theta_1 a_2) \end{pmatrix} \qquad (4)$$

où $S = (a_1, a_2, a_3, a_4)$ est un vecteur de symboles d'information. $a_1, a_2, a_3, a_4$ sont des symboles complexes d'une constellation $2^b$-QAM, sous-ensemble de $Z[i]$ où $Z$ est l'anneau des entiers. $\theta_1 = \dfrac{1 - \sqrt{5}}{2}$ est la racine conjuguée de $\theta$, $\alpha = 1 + i(1 - \theta)$ et $\alpha_1 = 1 + i(1 - \theta_1)$.

Le code d'or présente l'avantage d'être à diversité maximale et à plein débit au sens défini plus haut. En outre, il possède le gain de codage le plus élevé que l'on ait pu obtenir jusqu'à présent.

Un autre domaine des télécommunications fait actuellement l'objet de recherches considérables. Il s'agit des systèmes de télécommunication UWB, pressentis notamment pour le développement des futurs réseaux personnels sans fil (WPAN). Ces systèmes ont pour spécificité de travailler directement en bande de base avec des signaux très large bande. On entend généralement par signal UWB un signal conforme au masque spectral stipulé dans la réglementation du FCC du 14 Février 2002 et révisé en Mars 2005, c'est-à-dire pour l'essentiel un signal dans la bande spectrale 3.1 à 10.6 GHz et présentant une largeur de bande d'au moins 500 MHz à -10dB. En pratique, on connaît deux types de signaux UWB, les signaux multi-bande OFDM (MB-OFDM) et les signaux UWB de type impulsionnel. Nous nous intéresserons par la suite uniquement à ces derniers.

Un signal UWB impulsionnel est constitué d'impulsions très courtes, typiquement de l'ordre de quelques centaines de picosecondes, réparties au sein d'une trame. Afin de réduire l'interférence multi-accès (MAI pour *Multiple Access Interference*), un code de sauts temporels (TH pour *Time Hopping*) distinct est affecté à chaque utilisateur. Le signal issu ou à destination d'un utilisateur $k$ peut alors s'écrire sous la forme:

$$s_k(t) = \sum_{n=0}^{N_S-1} w(t - nT_s - c_k(n)T_c) \qquad (5)$$

où w est la forme de l'impulsion élémentaire, $T_c$ est une durée bribe (ou chip), $T_s$ est la durée d'un intervalle élémentaire avec $N_s = N_cT_c$ où $N_c$ est le nombre de chips dans un intervalle, la trame totale étant de durée $T_f = N_sT_s$ où $N_s$ est le nombre d'intervalles dans la trame. La durée de l'impulsion élémentaire est choisie inférieure à la durée chip, soit $T_w \leq T_c$. La séquence $c_k(n)$ pour $n=0,..,N_s$-1 définit le code de saut temporel de l'utilisateur $k$. Les séquences de sauts temporels sont choisies de manière à minimiser le nombre de collisions entre impulsions appartenant à des séquences de saut temporel d'utilisateurs différents.

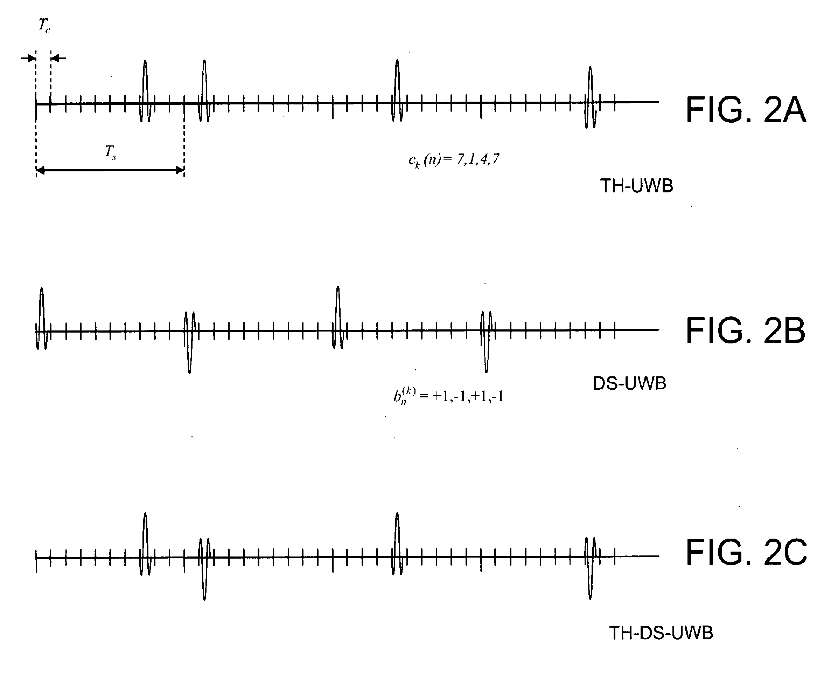

On a représenté en Fig. 2A un signal TH-UWB associé à un utilisateur $k$. Afin de transmettre un symbole d'information donné en provenance ou à destination d'un utilisateur $k$, on module généralement le signal TH-UWB à l'aide d'une modulation de position (PPM pour *Pulse Position Modulation*), soit pour le signal modulé :

$$s_k(t) = \sum_{n=0}^{N_s-1} w(t - nT_s - c_k(n)T_c - d_k\varepsilon) \qquad (6)$$

où $\varepsilon$ est un retard de modulation (dither) sensiblement inférieur à la durée chip $T_c$ et $d_k \in \{0,..,M\text{-}1\}$ est la position $M$-aire PPM du symbole.

Alternativement, les symboles d'information peuvent être transmis au moyen d'une modulation d'amplitude (PAM). Dans ce cas, le signal modulé peut s'écrire :

$$s_k(t) = \sum_{n=0}^{N_s-1} a^{(k)}.w(t - nT_s - c_k(n)T_c) \qquad (7)$$

où $a^{(k)} = 2m'\text{-}1\text{-}M'$ avec $m'=1,..,M'$, est le symbole $M'$-aire de la modulation PAM. On peut par exemple utiliser une modulation BPSK ($M'$=2).

Les modulations PPM et PAM peuvent aussi être combinées en une modulation composite $M.M'$-aire. Le signal modulé a alors la forme générale suivante :

$$s_k(t) = \sum_{n=0}^{N_s-1}\sum_{m=0}^{M-1} a_m^{(k)}.w(t - nT_s - c_k(n)T_c - m\varepsilon) \qquad (8)$$

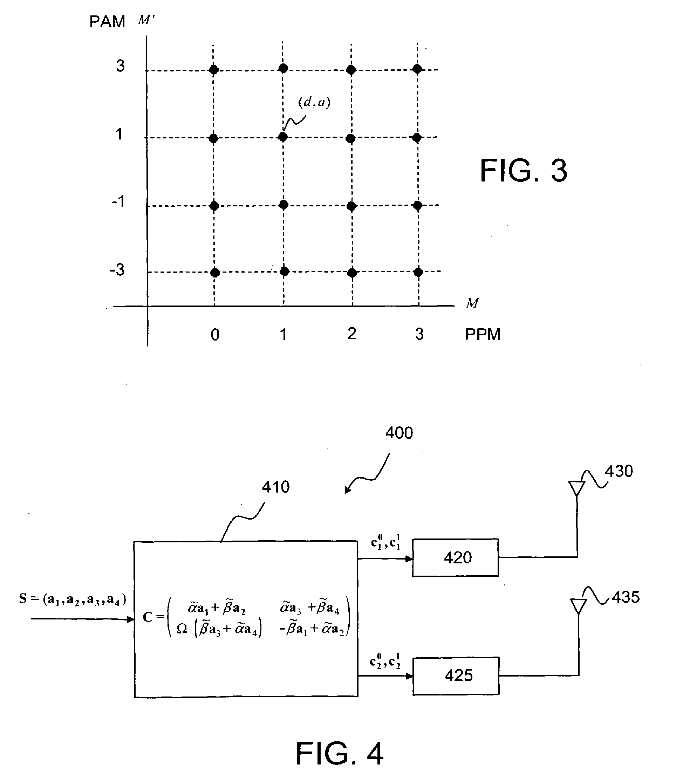

L'alphabet de cette modulation de cardinal $M.M'$ a été représenté en Fig. 3. Pour chacune des $M$ positions temporelles, $M'$ amplitudes de modulation sont possibles. Un symbole (d,a) de l'alphabet peut être représenté par une séquence $a_m$, $m=0,..,M\text{-}1$ avec $a_m = \delta(m\text{-}d)a$ où $d$ est une position de la modulation PPM, $a$ une amplitude de la modulation PAM et $\delta(.)$ la distribution de Dirac.

Au lieu de séparer les différents utilisateurs au moyen de codes de sauts temporels, il est également possible de les séparer par des codes orthogonaux, par exemple des codes de Hadamard, comme en DS-CDMA. On parle alors de DS-UWB (*Direct Spread* UWB). Dans ce cas on a pour l'expression du signal non modulé, correspondant à (5) :

$$s_k(t) = \sum_{n=0}^{N_s-1} b_n^{(k)} w(t - nT_s) \qquad (9)$$

où $b_n^{(k)}$, n=0,..,$N_s$-1 est la séquence d'étalement de l'utilisateur k. On remarque que l'expression (9) est analogue à celle d'un signal DS-CDMA classique. Elle en diffère cependant par le fait que les chips n'occupent pas toute la trame mais sont répartis à la période $T_s$. On a représenté en Fig. 2B un signal DS-UWB associé à un utilisateur k.

Comme précédemment, les symboles d'information peuvent être transmis au moyen d'une modulation PPM, d'une modulation PAM ou d'une modulation composite PPM-PAM. Le signal DS-UWB modulé en amplitude correspondant au signal TH-UWB (7) peut s'exprimer, en conservant les mêmes notations :

$$s_k(t) = \sum_{n=0}^{N_s-1} a^{(k)} b_n^{(k)} . w(t - nT_s) \qquad (10)$$

Enfin, il est connu de combiner codes de sauts temporels et codes d'étalement spectral pour offrir des accès multiples aux différents utilisateurs. On obtient ainsi un signal UWB impulsionnel TH-DS-UWB de forme générale :

$$s_k(t) = \sum_{n=0}^{N_s-1} b_n^{(k)} . w(t - nT_s - c_k(n)T_c) \qquad (11)$$

On a représenté en Fig. 2C un signal TH-DS-UWB associé à un utilisateur k. Ce signal peut être modulé par une modulation composite PPM-PAM M.M'-aire. On obtient alors pour le signal modulé :

$$s_k(t) = \sum_{n=0}^{N_s-1} \sum_{m=0}^{M-1} a_m^{(k)} b_n^{(k)} . w(t - nT_s - c_k(n)T_c - m\varepsilon) \qquad (12)$$

Il est connu de l'état de la technique d'utiliser des signaux UWB dans des systèmes MIMO. Dans ce cas, chaque antenne transmet un signal UWB modulé en fonction d'un symbole d'information ou d'un bloc de tels symboles (STBC).
Les techniques de codage spatio-temporel initialement développées pour des signaux à bande étroite ou pour le DS-CDMA s'appliquent mal aux signaux UWB impulsionnels. En effet, les codes spatio-temporels connus, comme le code d'or sont généralement à coefficients complexes et portent par conséquent une information de phase. Or, il est excessivement difficile de récupérer cette information de phase dans un signal à bande aussi large que celle des signaux UWB impulsionnels. Le support temporel très étroit des impulsions se prête beaucoup mieux à une modulation en position (PPM) ou en amplitude (PAM).
Un codage spatio-temporel des signaux UWB a été proposé dans l'article de Chadi Abou-Rjeily et al. intitulé « Space-Time coding for multiuser Ultra-Wideband communications » soumis à publication dans IEEE Transactions on Communications, Sept. 2005 et disponible sous www.tsi.enst.fr.
Conformément aux contraintes posées plus haut, le code spatio-temporel proposé est réel. Par exemple, pour une configuration à deux antennes en émission, le code peut s'écrire :

$$\mathbf{C} = \begin{pmatrix} \beta(a_1 + \theta a_2) & \sqrt{2}\beta(a_3 + \theta a_4) \\ \sqrt{2}\beta_1(a_3 + \theta_1 a_4) & \beta_1(a_1 + \theta_1 a_2) \end{pmatrix} \qquad (13)$$

avec $\beta = \dfrac{1}{\sqrt{1+\theta^2}}$ et $\beta_1 = \dfrac{1}{\sqrt{1+\theta_1^2}}$ ; S=($a_1,a_2,a_3,a_4$) est un vecteur de symboles d'information PAM, à savoir $a_i \in \{-M'+1,..., M'-1\}$.

Dans ce même article, on propose de généraliser ce code spatio-temporel au codage d'un bloc de symboles d'information appartenant à un alphabet PPM-PAM. Pour une configuration à deux antennes d'émission, ce code peut s'exprimer par la matrice de taille 2Mx2:

$$\mathbf{C} = \begin{pmatrix} \beta(a_{1,0} + \theta a_{2,0}) & \sqrt{2}\beta(a_{3,0} + \theta a_{4,0}) \\ \vdots & \vdots \\ \beta(a_{1,M-1} + \theta a_{2,M-1}) & \sqrt{2}\beta(a_{3,M-1} + \theta a_{4,M-1}) \\ \sqrt{2}\beta_1(a_{3,0} + \theta_1 a_{4,0}) & \beta_1(a_{1,0} + \theta_1 a_{2,0}) \\ \vdots & \vdots \\ \sqrt{2}\beta_1(a_{3,M-1} + \theta_1 a_{4,M-1}) & \beta_1(a_{1,M-1} + \theta_1 a_{2,M-1}) \end{pmatrix} \qquad (14)$$

Chaque symbole d'information $\mathbf{a_i}=(a_{i,0},...,a_{i,M-1})$ est ici un vecteur représentant un élément de l'alphabet PPM-PAM avec $a_{i,m}=a_{i\delta}(m-d_i)$ où $a_i$ est un élément de l'alphabet PAM et $d_i$ de l'alphabet PPM. Le bloc de symboles d'information codés par le code $\mathbf{C}$ n'est autre que $\mathbf{S=(a_1,a_2,a_3,a_4)}$.

Plus précisément, le bloc de symboles d'information S donne lieu à la génération des signaux UWB selon les expressions données ci-après. On a supposé, pour simplifier les notations, une utilisation mono utilisateur (pas d'indexation par $k$, ni de séquence d'étalement).

L'antenne 1 transmet pendant la durée de la première trame $T_f$ le signal :

$$s^1(t) = \beta \sum_{n=0}^{N_s-1} \sum_{m=0}^{M-1} (a_{1,m} + \theta a_{2,m}) w(t - nT_s - c(n)T_c - m\varepsilon) \qquad (15)$$

signal, qui correspond au premier vecteur colonne des $M$ premières lignes du code (14).

L'antenne 2 transmet simultanément pendant la durée de la première trame $T_f$ le signal :

$$s^2(t) = \beta\sqrt{2} \sum_{n=0}^{N_s-1} \sum_{m=0}^{M-1} (a_{3,m} + \theta a_{4,m}) w(t - nT_s - c(n)T_c - m\varepsilon) \qquad (16)$$

signal qui correspond au second vecteur colonne des $M$ premières lignes du code.

L'antenne 1 transmet ensuite pendant la durée de la seconde trame, en prenant à nouveau l'origine des temps au début de la trame :

$$s^1(t) = \beta_1\sqrt{2} \sum_{n=0}^{N_s-1} \sum_{m=0}^{M-1} (a_{3,m} + \theta a_{4,m}) w(t - nT_s - c(n)T_c - m\varepsilon) \qquad (17)$$

signal qui correspond au premier vecteur colonne des $M$ dernières lignes du code.

Enfin l'antenne 2 transmet simultanément pendant la durée de la seconde trame le signal:

$$s^2(t) = \beta_1 \sum_{n=0}^{N_s-1} \sum_{m=0}^{M-1} (a_{1,m} + \theta a_{2,m}) w(t - nT_s - c(n)T_c - m\varepsilon) \qquad (18)$$

signal qui correspond au second vecteur colonne des $M$ dernières lignes du code.

Le code spatio-temporel défini ci-dessus présente de très bonnes performances en terme de diversité. Toutefois son gain de codage est inférieur à celui du code d'or défini par (4). En outre, le terme scalaire $\sqrt{2}$ apparaissant dans la matrice (14) crée, à chaque trame, un déséquilibre énergétique entre les antennes.

Le but de la présente invention est de proposer un code spatio-temporel réel pour un système MIMO à signaux UWB impulsionnels qui possède un gain de codage supérieur à ceux des codes connus pour de tels systèmes, en particulier le code défini par (14). En outre, le but de la présente invention est de prévoir un code spatio-temporel présentant à chaque trame une distribution d'énergie équilibrée entre les antennes.

## EXPOSÉ DE L'INVENTION

La présente invention est définie par un procédé de codage spatio-temporel pour système de transmission UWB comprenant deux éléments radiatifs, ledit procédé codant un bloc de symboles d'information ($S = (a_1, a_2, a_3, a_4)$) appartenant à une constellation de modulation PPM ou de modulation composite PPM-PAM, présentant un nombre de positions temporelles supérieur ou égal à 3, en une séquence de vecteurs ($c_1^0, c_2^0, c_1^1, c_2^1$), les composantes d'un vecteur étant destinées à moduler un signal UWB impulsionnel pour un élément radiatif dudit système et pour un intervalle de transmission donné ($T_f$). Selon ce procédé, un premier et un second desdits vecteurs sont obtenus au moyen d'une première combinaison linéaire d'une première et d'une seconde paires desdits symboles et qu'un troisième et un quatrième desdits vecteurs sont obtenus au moyen d'une seconde combinaison linéaire desdites première et seconde paires desdits symboles, la première et la seconde combinaisons linéaires utilisant des coefficients scalaires ($\overline{\alpha}, \overline{\beta}, -\overline{\beta}, \overline{\alpha}$) dont les rapports respectifs sont sensiblement égaux au nombre d'or et à son opposé, un desdits vecteurs subissant en outre une permutation circulaire de ses composantes avant de moduler ledit signal UWB impulsionnel.

La présente invention est également définie par un dispositif de codage spatio-temporel pour mettre en oeuvre ledit procédé. Pour ce faire, le dispositif comprend :

- des éléments de mémoire d'entrée pour mémoriser quatre symboles d'information, chaque symbole d'information étant constitué de $M$ composantes avec $M \geq 3$, chaque composante pouvant prendre $M'$ valeurs où $M' \geq 1$ ;
- une première pluralité de premiers modules recevant chacun une composante d'un premier symbole d'information et une composante de même rang d'un second symbole d'information, chaque module effectuant lesdites première et seconde combinaisons linéaires desdites composantes pour fournir une première et une seconde valeurs de sortie ;
- une seconde pluralité de seconds modules recevant chacun une composante d'un troisième symbole d'information et une composante de même rang d'un quatrième symbole d'information, chaque module effectuant lesdites première et seconde combinaisons linéaires desdites composantes pour fournir une première et une seconde valeurs de sortie ;
- des éléments de mémoire de sortie pour stocker respectivement les premières valeurs et secondes valeurs de sortie des premiers et seconds modules ;
- des moyens pour permuter les adresses d'écriture ou de lecture d'un des éléments de sortie selon une permutation circulaire d'ordre $M$.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

la Fig. 1 représente schématiquement un système de transmission MIMO avec codage STBC connu de l'état de la technique ;
les Fig. 2A à 2C représentent les formes respectives de signaux TH-UWB, DS-UWB et TH-DS-UWB ;
la Fig. 3 représente un exemple de constellation d'une modulation PPM-PAM ;
la Fig. 4 représente schématiquement un système de transmission MIMO utilisant le codage spatio-temporel selon l'invention ;
la Fig. 5 représente schématiquement la structure d'un codeur spatio-temporel selon un mode de réalisation de l'invention ;
la Fig. 6 représente schématiquement la structure d'un module élémentaire utile à la réalisation du codeur spatio-temporel de la Fig.5.

## EXPOSÉ DÉTAILLÉ DE MODES DE RÉALISATION PARTICULIERS

L'idée à la base de l'invention est de créer un code spatio-temporel s'affranchissant à la fois des valeurs complexes $\alpha$ et $\alpha_1$ figurant dans le code d'or (4), incompatibles comme on l'a dit avec l'utilisation de signaux UWB impulsionnels, et des scalaires $\sqrt{2}$ figurant dans les codes (13) et (14), à l'origine d'une distribution déséquilibrée de l'énergie sur les antennes.

Le code spatio-temporel proposé s'applique aux systèmes MIMO à deux antennes de transmission utilisant des signaux UWB impulsionnels dans lesquels les symboles d'information sont modulés à l'aide d'une modulation PPM-PAM avec $M \geq 3$ où $M$ est, comme défini précédemment, le cardinal de la modulation PPM . Il est clair pour l'homme du métier que ce type de modulation inclut en particulier les modulations uniquement PPM avec $M \geq 3$. Le code proposé est représenté par la matrice de dimension 2Mx2, où $M$ est comme précédemment le cardinal de la modulation PPM :

$$\mathbf{C} = \begin{pmatrix} \widetilde{\alpha}\mathbf{a}_1 + \widetilde{\beta}\mathbf{a}_2 & \widetilde{\alpha}\mathbf{a}_3 + \widetilde{\beta}\mathbf{a}_4 \\ \mathbf{\Omega}\left(-\widetilde{\beta}\mathbf{a}_3 + \widetilde{\alpha}\mathbf{a}_4\right) & -\widetilde{\beta}\mathbf{a}_1 + \widetilde{\alpha}\mathbf{a}_2 \end{pmatrix} \tag{19}$$

avec $\widetilde{\alpha} = \dfrac{1}{\sqrt{1+\theta^2}}$ ; $\widetilde{\beta} = \dfrac{\theta}{\sqrt{1+\theta^2}}$ ; $\theta = \dfrac{1+\sqrt{5}}{2}$ ; $\mathbf{a}_i = (a_{i,0},...,a_{i,M-1})$ étant les symboles d'information comme précédemment et $\Omega$ est une matrice de permutation circulaire de dimension $MxM$. Par exemple, $\Omega$ est un simple décalage circulaire :

$$\mathbf{\Omega} = \begin{pmatrix} \mathbf{0}_{1\times M-1} & 1 \\ \mathbf{I}_{M-1\times M-1} & \mathbf{0}_{M-1\times 1} \end{pmatrix} = \begin{pmatrix} 0 & 0 & \cdots & 0 & 1 \\ 1 & 0 & \cdots & 0 & 0 \\ 0 & 1 & 0 & \ddots & \vdots \\ \vdots & \ddots & \ddots & \ddots & 0 \\ 0 & \cdots & 0 & 1 & 0 \end{pmatrix} \tag{20}$$

où $\mathbf{I}_{M-1\times M-1}$ est la matrice identité de taille $M$-1, $\mathbf{0}_{1\times M-1}$ est le vecteur ligne nul de taille $M$-1, $\mathbf{0}_{M-1\times 1}$ le vecteur colonne nul de taille $M$-1.

Comme on peut le constater, la matrice $\mathbf{C}$ est réelle et ne présente pas de pondération dissymétrique selon les antennes. Elle peut s'écrire de manière plus explicite :

$$\mathbf{C} = \begin{pmatrix} \widetilde{\alpha}a_{1,0} + \widetilde{\beta}a_{2,0} & \widetilde{\alpha}a_{3,0} + \widetilde{\beta}a_{4,0} \\ \widetilde{\alpha}a_{1,1} + \widetilde{\beta}a_{2,1} & \widetilde{\alpha}a_{3,1} + \widetilde{\beta}a_{4,1} \\ \vdots & \vdots \\ \widetilde{\alpha}a_{1,M-1} + \widetilde{\beta}a_{2,M-1} & \widetilde{\alpha}a_{3,M-1} + \widetilde{\beta}a_{4,M-1} \\ -\widetilde{\beta}a_{3,M-1} + \widetilde{\alpha}a_{4,M-1} & -\widetilde{\beta}a_{1,0} + \widetilde{\alpha}a_{2,0} \\ -\widetilde{\beta}a_{3,0} + \widetilde{\alpha}a_{4,0} & -\widetilde{\beta}a_{1,1} + \widetilde{\alpha}a_{2,1} \\ \vdots & \vdots \\ -\widetilde{\beta}a_{3,M-2} + \widetilde{\alpha}a_{4,M-2} & -\widetilde{\beta}a_{1,M-1} + \widetilde{\alpha}a_{2,M-1} \end{pmatrix} \tag{21}$$

D'après l'expression (21), on voit que l'effet de la multiplication par la matrice $\Omega$ se traduit par une permutation circulaire sur le premier vecteur colonne des $M$ dernières lignes de la matrice **C.** Ainsi, alors que pendant la première trame ($M$ premières lignes de **C**), l'ordre chronologique des positions PPM est identique pour les deux antennes, pour la seconde trame ($M$ dernières lignes de **C**), en revanche, les positions PPM relatives aux symboles $\mathbf{a_3,a_4}$ subissent une permutation circulaire, par rapport aux positions PPM des symboles $\mathbf{a_1,a_2}$. Dans l'exemple donné, la permutation circulaire est un simple décalage circulaire. En d'autres termes, tout se passe comme si pendant la seconde trame la constellation PPM-PAM des symboles $\mathbf{a_3,a_4}$' telle qu'illustrée en Fig. 3 avait fait l'objet d'un rotation cyclique d'une position vers la droite.

De manière générale, la matrice $\Omega$ est une matrice de permutation circulaire d'ordre $M$. Etant donné que avec $M \geq 3$, cette matrice ne se réduit pas à une simple transposition. Les expressions (15) à (18), donnant les signaux UWB générés par les deux antennes pendant la première et la seconde trames, sont alors à remplacer par les expressions (21) à (24) suivantes :

première trame :

$$s^1(t) = \sum_{n=0}^{N_s-1}\sum_{m=0}^{M-1}(\widetilde{\alpha}a_{1,m} + \widetilde{\beta}a_{2,m})w(t - nT_s - c(n)T_c - m\varepsilon) \qquad (21)$$

$$s^2(t) = \sum_{n=0}^{N_s-1}\sum_{m=0}^{M-1}(\widetilde{\alpha}a_{3,m} + \widetilde{\beta}a_{4,m})w(t - nT_s - c(n)T_c - m\varepsilon) \qquad (22)$$

seconde trame :

$$s^1(t) = \sum_{n=0}^{N_s-1}\sum_{m=0}^{M-1}(-\widetilde{\beta}a_{3,\sigma(m)} + \widetilde{\alpha}a_{4,\sigma(m)})w(t - nT_s - c(n)T_c - m\varepsilon) \qquad (23)$$

$$s^2(t) = \sum_{n=0}^{N_s-1}\sum_{m=0}^{M-1}(-\widetilde{\beta}a_{1,m} + \widetilde{\alpha}a_{2,m})w(t - nT_s - c(n)T_c - m\varepsilon) \qquad (24)$$

où $\sigma$ est une permutation circulaire de l'ensemble $\{0,1,..,M\text{-}1\}$.

La matrice $\Omega$ du code proposé peut être encore une permutation circulaire associée à un changement de signe d'un quelconque ou d'une pluralité de ses éléments. Dans le cas de l'exemple donné en (20), les matrices :

$$\mathbf{\Omega} = \begin{pmatrix} 0 & 0 & \cdots & 0 & \chi_0 \\ \chi_1 & 0 & \cdots & 0 & 0 \\ 0 & \chi_2 & 0 & \ddots & \vdots \\ \vdots & \ddots & \ddots & \ddots & 0 \\ 0 & \cdots & 0 & \chi_{M-1} & 0 \end{pmatrix} \qquad (25)$$

avec $\chi_i = \pm 1$, peuvent également être employées dans le code **C** selon l'invention. On notera qu'une permutation circulaire associée à une inversion de signe revient à effectuer dans la constellation PPM-PAM (cf. Fig. 3) une rotation cyclique sur les positions et une symétrie par rapport à l'axe d'amplitude nulle de la constellation PAM pour les positions concernées par cette inversion.

Alternativement au code spatio-temporel défini par (19), on peut encore utiliser les variantes suivantes :

$$\mathbf{C} = \begin{pmatrix} -\widetilde{\beta}\mathbf{a}_1 + \widetilde{\alpha}\mathbf{a}_2 & \widetilde{\alpha}\mathbf{a}_3 + \widetilde{\beta}\mathbf{a}_4 \\ \Omega\left(-\widetilde{\beta}\mathbf{a}_3 + \widetilde{\alpha}\mathbf{a}_4\right) & \widetilde{\alpha}\mathbf{a}_1 + \widetilde{\beta}\mathbf{a}_2 \end{pmatrix} \qquad (26)$$

$$\mathbf{C} = \begin{pmatrix} \widetilde{\alpha}\mathbf{a}_1 + \widetilde{\beta}\mathbf{a}_2 & \Omega\left(-\widetilde{\beta}\mathbf{a}_3 + \widetilde{\alpha}\mathbf{a}_4\right) \\ \widetilde{\alpha}\mathbf{a}_3 + \widetilde{\beta}\mathbf{a}_4 & -\widetilde{\beta}\mathbf{a}_1 + \widetilde{\alpha}\mathbf{a}_2 \end{pmatrix} \qquad (27)$$

$$\mathbf{C} = \begin{pmatrix} -\widetilde{\beta}\mathbf{a}_1 + \widetilde{\alpha}\mathbf{a}_2 & \Omega\left(-\widetilde{\beta}\mathbf{a}_3 + \widetilde{\alpha}\mathbf{a}_4\right) \\ \widetilde{\alpha}\mathbf{a}_3 + \widetilde{\beta}\mathbf{a}_4 & \widetilde{\alpha}\mathbf{a}_1 + \widetilde{\beta}\mathbf{a}_2 \end{pmatrix} \qquad (28)$$

obtenues par permutation des vecteurs colonnes $M$x1 diagonaux ou/et antidiagonaux de (19).

Bien entendu, pour les matrices (26), (27), (28), la matrice $\Omega$ pourra prendre les mêmes variantes de forme que celles déjà envisagées pour (19) à savoir celle d'une permutation circulaire associée ou non à une inversion de signe d'un ou d'une pluralité de ses éléments.

En outre, il est important de noter que quelle que soit la forme du code envisagée (19), (26), (27), (28) une permutation quelconque sur les indices des symboles $\mathbf{a}_i$ est encore un code spatio-temporel au sens de l'invention, puisqu'une telle permutation est équivalente à un simple réarrangement temporel au sein du bloc $\mathbf{S} = (\mathbf{a}_1, \mathbf{a}_2, \mathbf{a}_3, \mathbf{a}_4)$.

Enfin, les coefficients $\widetilde{\alpha}$ et $\widetilde{\beta}$ de la matrice **C** sont dans un rapport égal au nombre d'or et tels que $\widetilde{\alpha}^2 + \widetilde{\beta}^2 = 1$ (gain d'énergie égal à 1). Il est clair que des valeurs homothétiques de $\widetilde{\alpha}$ et $\widetilde{\beta}$, conservant cette valeur de rapport, conduisent également à un code spatio-temporel au sens de l'invention. En pratique, coefficients $\widetilde{\alpha}$ et $\widetilde{\beta}$ sont quantifiés sous forme numérique, ce qui conduit à un rapport légèrement différent du nombre d'or. On a pu montrer qu'un écart de ce rapport de $\pm 10\%$ autour du nombre d'or n'altérait significativement les performances du code spatio-temporel. On entendra par la suite un rapport sensiblement égal au nombre d'or, un rapport tombant dans cette plage de variation.

Quelle que soit la forme du code envisagée (19), (26), (27), (28), ce dernier permet de transmettre quatre symboles d'information sur deux antennes pour deux utilisations du canal. Il est par conséquent à plein débit. On peut également montrer que le code est à diversité maximale pour $M \geq 3$, $\forall M' \geq 1$ et que, de surcroît, le gain de codage est optimal dans les cas suivants :

(a) $M'=1$ et $M \geq 3$, c'est-à-dire pour les modulations 3-PPM, 4-PPM etc.
(b) $M \geq 4$, $\forall M' \geq 1$.

La Fig. 4 illustre un exemple de système de transmission utilisant le codage spatio-temporel selon l'invention.

Le système 400 reçoit des symboles d'informations par bloc $\mathbf{S}=(\mathbf{a}_1, \mathbf{a}_2, \mathbf{a}_3, \mathbf{a}_4)$ où les $\mathbf{a}_i$ sont des symboles d'une constellation PPM-PAM. Alternativement, les symboles d'information peuvent provenir d'une autre constellation $M.M'$-aire à condition de subir préalablement un transcodage (*mapping*) dans la constellation PPM-PAM. Bien entendu, les symboles d'information peuvent être issus d'une ou d'une pluralité d'opérations bien connues de l'homme du métier telles que codage source, codage canal de type convolutionnel, par bloc ou bien encore turbocodage série ou parallèle, entrelacement, etc.

Le bloc de symboles d'information subit une opération de codage dans le codeur spatio-temporel 410. Plus précisément, le module 410 calcule les coefficients de la matrice **C** obéissant à l'une des expressions (14), (26), (27), (28) ou leurs variantes. Les deux vecteurs colonnes $\mathbf{c}_1^0, \mathbf{c}_2^0$ constitués des $M$ premières lignes de **C** sont transmis respectivement aux modulateurs UWB 420 et 425 pour la première trame, puis les deux vecteurs colonnes $\mathbf{c}_1^1, \mathbf{c}_2^1$ constitués des $M$ dernières lignes de **C**, pour la seconde trame. L'indice supérieur indique ici la trame et l'indice inférieur l'élément radiatif 430 ou 435. Le modulateur UWB 420 génère à partir des vecteurs $\mathbf{c}_1^0, \mathbf{c}_1^1$ les signaux UWB impulsionnels modulés correspondants. De même, le modulateur UWB 425 génère à partir des vecteurs $\mathbf{c}_2^0, \mathbf{c}_2^1$ les signaux UWB impulsionnels modulés correspondants. Par exemple, si l'on utilise la matrice de codage spatio-temporel (19) comme indiqué sur la figure, le modulateur UWB 420 fournira successivement les signaux (21) et (23) alors que le modulateur UWB 425 fournira successivement les signaux (22) et (24). De manière générale, les signaux UWB impulsionnels servant de support à la modulation peuvent être du type TH-UWB, DS-UWB ou TH-DS-UWB. Les signaux UWB impulsionnels ainsi modulés sont transmis ensuite aux éléments radiatifs 430 et 435. Ces éléments radiatifs peuvent être des antennes UWB ou bien des diodes laser ou des DELs, fonctionnant par exemple dans le domaine infrarouge, associées à des modulateurs électro-optiques. Le système de transmission proposé peut alors être utilisé dans le domaine des télécommunications optiques sans fil.

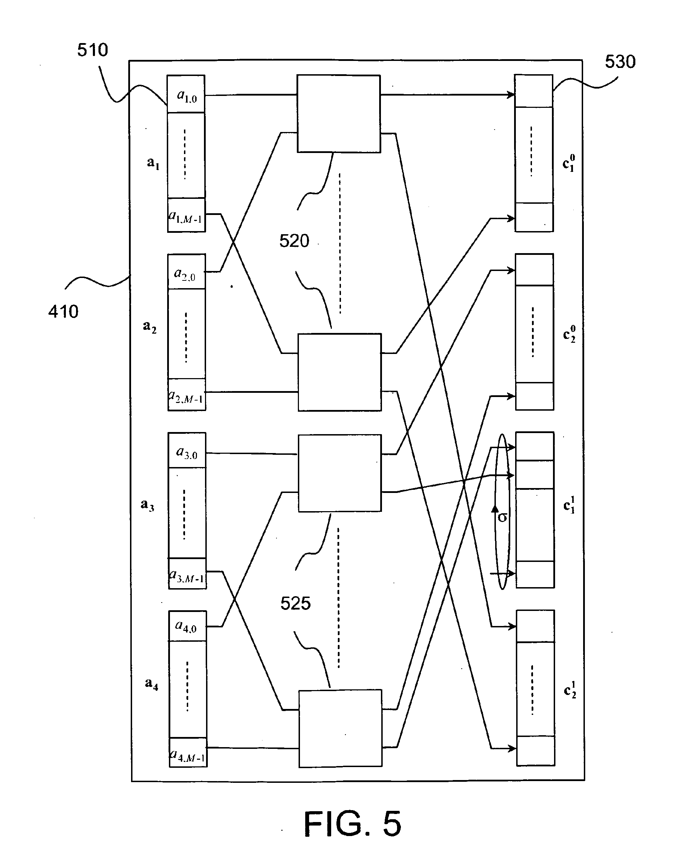

La Fig. 5 illustre un mode de réalisation avantageux du codeur spatio-temporel 410 de la Fig. 4. Le codeur utilise un module élémentaire 520 ou 525 à deux entrées et deux sorties, effectuant l'opération linéaire suivante:

$$X = \tilde{\alpha}x + \tilde{\beta}y$$

$$Y = -\tilde{\beta}x + \tilde{\alpha}y \qquad\qquad\qquad (29)$$

où toutes les valeurs sont scalaires ; $x,y$ sont les valeurs d'entrée ; $X,Y$ sont les valeurs de sortie.

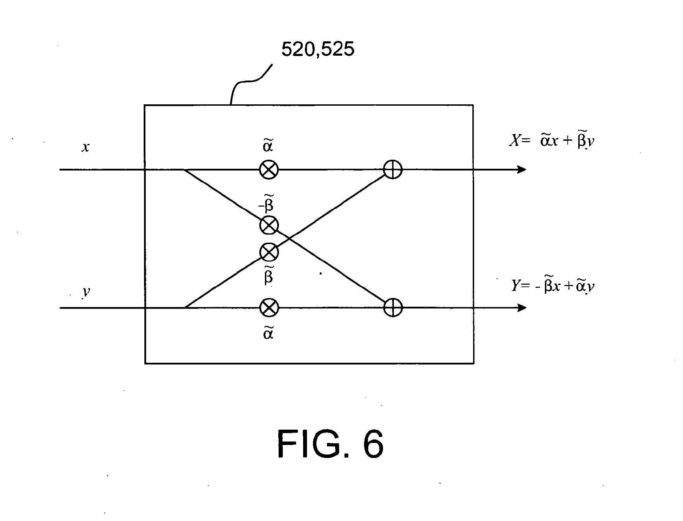

Un exemple de module 520, 525 a été illustré schématiquement en Fig. 6. Les modules 520, 525 peuvent être constitués de multiplicateurs et d'additionneurs câblés comme indiqué ou bien être réalisés au moyen d'opérations microséquencées.

Le codeur spatio-temporel comprend un nombre **2M** de tels modules élémentaires opérant en parallèle. Selon une variante de réalisation non représentée, le codeur spatio-temporel peut contenir simplement un sous-multiple de ces **2M** modules, les données présentées en entrée et les données fournies en sortie étant alors respectivement multiplexées et démultiplexées dans le temps.

Les composantes des vecteurs $\mathbf{a}_1, \mathbf{a}_2, \mathbf{a}_3, \mathbf{a}_4$ sont stockées en entrée dans des buffers 510. Les modules élémentaires 520 effectuent l'opération (29) sur les $M$ composantes des vecteurs $\mathbf{a}_1, \mathbf{a}_2$ et les modules élémentaires 525 effectuent la même opération sur les composantes des vecteurs $\mathbf{a}_3, \mathbf{a}_4$.

Les vecteurs colonnes $\mathbf{c}_1^0, \mathbf{c}_2^0$ et $\mathbf{c}_1^1, \mathbf{c}_2^1$ relatifs respectivement à la première et à la seconde trame sont stockés dans les buffers de sortie 530.

La Fig. 5 illustre le cas où le codage spatio-temporel a la forme (19). Les valeurs $X$ et $Y$ en sortie des modules élémentaires 520 sont respectivement écrites dans les buffers 530 de $\mathbf{c}_1^0$ et $\mathbf{c}_2^1$. Les valeurs $X$ et $Y$ en sortie des modules élémentaires 525 sont respectivement écrites dans les buffers 530 de $\mathbf{c}_2^0$ et $\mathbf{c}_1^1$. Bien entendu, l'utilisation d'un codage temporel du type (26),(27) ou(28) conduirait à une écriture dans des buffers permutés. Dans le cas illustré en Fig. 5, l'écriture des valeurs $X,Y$ dans les buffers de sortie de $\mathbf{c}_1^0$, $\mathbf{c}_2^0$ et $\mathbf{c}_2^1$ se fait dans le même ordre que celui des composantes des vecteurs $\mathbf{a}_1, \mathbf{a}_2, \mathbf{a}_3, \mathbf{a}_4$. En revanche, l'écriture dans le buffer 530 de $\mathbf{c}_1^1$ se fait selon des adresses permutées par la permutation circulaire σ. Selon une variante de réalisation non représentée, l'écriture dans le buffer de $\mathbf{c}_1^1$ se fait également dans le même ordre que celui des composantes des vecteurs $\mathbf{a}_1, \mathbf{a}_2, \mathbf{a}_3, \mathbf{a}_4$ mais la lecture se fait selon des adresses permutées par $\alpha^{-1}$. Dans les deux cas, des moyens d'adressage sont prévus pour permuter les adresses d'écriture ou de lecture en entrée ou en sortie du buffer 530.

Si des inversions de signe sont présentes dans la matrice Ω elles peuvent être prises en compte en changeant

le signe de $\tilde{\alpha}$ et/ou $\tilde{\beta}$ au sein des modules 525 relatifs à la ou aux composantes concernées.

Les signaux UWB transmis par le système illustré en Fig. 4 peuvent être traités par un récepteur multi-antenne de manière classique. Le récepteur pourra par exemple comprendre un étage de corrélation de type Rake suivi d'un étage de décision, utilisant par exemple un décodeur par sphère connu de l'homme du métier.

**Revendications**

1. Procédé de codage spatio-temporel pour système de transmission UWB comprenant deux éléments radiatifs, ledit procédé codant un bloc de symboles d'information ($\mathbf{S} = (\mathbf{a_1}, \mathbf{a_2}, \mathbf{a_3}, \mathbf{a_4})$) appartenant à une constellation de modulation PPM ou de modulation composite PPM-PAM, présentant un nombre de positions temporelles supérieur ou égal à 3, en une séquence de vecteurs ($\mathbf{c_1^0}, \mathbf{c_2^0}, \mathbf{c_1^1}, \mathbf{c_2^1}$), les composantes d'un vecteur étant destinées à moduler un signal UWB impulsionnel pour un élément radiatif dudit système et pour un intervalle de transmission donné ($T_f$), **caractérisé en ce qu'**un premier et un second desdits vecteurs sont obtenus au moyen d'une première combinaison linéaire d'une première et d'une seconde paires desdits symboles et qu'un troisième et un quatrième desdits vecteurs sont obtenus au moyen d'une seconde combinaison linéaire desdites première et seconde paires desdits symboles, la première et la seconde combinaisons linéaires utilisant des coefficients scalaires ($\tilde{\alpha}, \tilde{\beta}, -\tilde{\beta}, \tilde{\alpha}$) dont les rapports respectifs sont sensiblement égaux au nombre d'or et à son opposé, un desdits vecteurs subissant en outre une permutation circulaire de ses composantes avant de moduler ledit signal UWB impulsionnel.

2. Procédé de codage spatio-temporel selon la revendication 1, **caractérisé en ce que** ledit vecteur ayant subi ladite permutation circulaire est soumis à une inversion d'une ou d'une pluralité de ses composantes avant de moduler ledit signal UWB impulsionnel.

3. Procédé de codage spatio-temporel selon la revendication 1, **caractérisé en ce que** lesdits vecteurs sont définis par les composantes blocs $M$x1 de la matrice de dimension 2$M$x2:

$$\mathbf{C} = \begin{pmatrix} \tilde{\alpha}\mathbf{a_1} + \tilde{\beta}\mathbf{a_2} & \tilde{\alpha}\mathbf{a_3} + \tilde{\beta}\mathbf{a_4} \\ \mathbf{\Omega}\left(-\tilde{\beta}\mathbf{a_3} + \tilde{\alpha}\mathbf{a_4}\right) & -\tilde{\beta}\mathbf{a_1} + \tilde{\alpha}\mathbf{a_2} \end{pmatrix}$$

ou bien par les composantes blocs $M$x1 de la matrice de dimension 2$M$x2 :

$$\mathbf{C} = \begin{pmatrix} -\tilde{\beta}\mathbf{a_1} + \tilde{\alpha}\mathbf{a_2} & \tilde{\alpha}\mathbf{a_3} + \tilde{\beta}\mathbf{a_4} \\ \mathbf{\Omega}\left(-\tilde{\beta}\mathbf{a_3} + \tilde{\alpha}\mathbf{a_4}\right) & \tilde{\alpha}\mathbf{a_1} + \tilde{\beta}\mathbf{a_2} \end{pmatrix}$$

ou bien par les composantes blocs $M$x1 de la matrice de dimension 2$M$x2 :

$$\mathbf{C} = \begin{pmatrix} \tilde{\alpha}\mathbf{a_1} + \tilde{\beta}\mathbf{a_2} & \mathbf{\Omega}\left(-\tilde{\beta}\mathbf{a_3} + \tilde{\alpha}\mathbf{a_4}\right) \\ \tilde{\alpha}\mathbf{a_3} + \tilde{\beta}\mathbf{a_4} & -\tilde{\beta}\mathbf{a_1} + \tilde{\alpha}\mathbf{a_2} \end{pmatrix}$$

ou encore par les composantes blocs $M$x1 de la matrice de dimension 2$M$x2 :

$$C = \begin{pmatrix} -\widetilde{\beta}\mathbf{a}_1 + \widetilde{\alpha}\mathbf{a}_2 & \Omega\left(-\widetilde{\beta}\mathbf{a}_3 + \widetilde{\alpha}\mathbf{a}_4\right) \\ \widetilde{\alpha}\mathbf{a}_3 + \widetilde{\beta}\mathbf{a}_4 & \widetilde{\alpha}\mathbf{a}_1 + \widetilde{\beta}\mathbf{a}_2 \end{pmatrix}$$

dans lesquels $\mathbf{a}_1, \mathbf{a}_2, \mathbf{a}_3, \mathbf{a}_4$ sont lesdits symboles d'information, $\widetilde{\alpha}, \widetilde{\beta}$ sont les coefficients scalaires de ladite première combinaison linéaire, $-\widetilde{\beta}, \widetilde{\alpha}$ sont les coefficients scalaires de ladite seconde combinaison linéaire, $M$ est l'ordre de la modulation PPM et $\Omega$ est une matrice $MxM$ de permutation circulaire, ayant subi ou non une inversion de signe de l'un ou d'une pluralité de ses coefficients ($\chi_i$).

4.  Procédé de transmission d'une pluralité de symboles d'information appartenant à une constellation de modulation PPM ou de modulation composite PPM-PAM présentant un nombre de positions temporelles supérieur ou égal à 3, **caractérisé en ce que** lesdits symboles d'information sont codés au moyen du codage spatio-temporel selon l'une des revendications précédentes pour fournir lesdits premier, second, troisième et quatrième vecteurs, les composantes de chacun de ces quatre vecteurs modulant la position ou bien la position et l'amplitude des impulsions composant un signal UWB impulsionnel pour obtenir quatre signaux UWB impulsionnels modulés, ces quatre signaux étant respectivement transmis par un premier et un second éléments radiatifs pendant un premier et un second intervalles de transmission.

5.  Procédé de transmission selon la revendication 4, **caractérisé en ce que** les éléments radiatifs sont des antennes UWB.

6.  Procédé de transmission selon la revendication 4, **caractérisé en ce que** les éléments radiatifs sont des diodes laser ou des diodes électroluminescentes.

7.  Procédé selon l'un des revendication 4 à 6 **caractérisé en ce que** ledit signal impulsionnel est un signal TH-UWB.

8.  Procédé selon l'un des revendications 4 à 6 **caractérisé en ce que** ledit signal impulsionnel est un signal DS-UWB.

9.  Procédé selon l'une des revendications 4 à 6 **caractérisé en ce que** ledit signal impulsionnel est un signal TH-DS-UWB.

10. Dispositif de codage spatio-temporel pour mettre en oeuvre le procédé selon l'une des revendications 1 à 3, **caractérisé en ce qu'**il comprend :

    - des éléments de mémoire d'entrée (510) pour mémoriser quatre symboles d'information, chaque symbole d'information étant constitué de $M$ composantes avec $M{\geq}3$, chaque composante pouvant prendre $M'$ valeurs où $M' \geq 1$
    - une première pluralité de premiers modules (520) recevant chacun une composante d'un premier symbole d'information et une composante de même rang d'un second symbole d'information, chaque module effectuant lesdites première et seconde combinaisons linéaires desdites composantes pour fournir une première et une seconde valeurs de sortie ;
    - une seconde pluralité de seconds modules (525) recevant chacun une composante d'un troisième symbole d'information et une composante de même rang d'un quatrième symbole d'information, chaque module effectuant lesdites première et seconde combinaisons linéaires desdites composantes pour fournir une première et une seconde valeurs de sortie ;
    - des éléments de mémoire de sortie (530) pour stocker respectivement les premières valeurs et secondes valeurs de sortie des premiers et seconds modules ;
    - des moyens pour permuter les adresses d'écriture ou de lecture d'un des éléments de sortie selon une permutation circulaire d'ordre $M$.

**Claims**

1.  Space-time coding method for a UWB transmission system comprising two radiation elements, said method coding a block of information symbols ($\mathbf{S}=(\mathbf{a_1},\mathbf{a_2},\mathbf{a_3},\mathbf{a_4})$) belonging to a PPM modulation constellation or a PPM-PAM composite modulation constellation with a number of time positions greater than or equal to 3, into a sequence of vectors ($\mathbf{c_1^0},\mathbf{c_2^0},\mathbf{c_1^1},\mathbf{c_2^1}$), the components of a vector being intended to modulate a UWB pulse signal for a radiation element of said system and for a given transmission interval ($T_f$), **characterised in that** a first and a second of said vectors are obtained by means of a first linear combination of a first and a second pair of said symbols, and **in that** a third and a fourth of said vectors are obtained by means of a second linear combination of said first and second pairs of said symbols, the first and the second linear combinations using scalar coefficients ($\tilde{\alpha},\tilde{\beta}$, $-\tilde{\beta},\tilde{\alpha}$), of which the corresponding ratios are approximately equal to the Golden number and to its opposite, the components of one of said vectors also being permuted according to a cyclic permutation prior to modulating said pulse UWB signal.

2. Space-time coding method according to claim 1, **characterised in that** said vector having been subject to said cyclic permutation is subject to a sign inversion of one or a plurality of its components prior to modulating said pulse UWB signal.

3. Space-time coding method according to claim 1, **characterised in that** said vectors are defined by Mx1 block components of the matrix with size 2*Mx2*:

$$\mathbf{C} = \begin{pmatrix} \tilde{\alpha}\mathbf{a_1} + \tilde{\beta}\mathbf{a_2} & \tilde{\alpha}\mathbf{a}_3 + \tilde{\beta}\mathbf{a}_4 \\ \mathbf{\Omega}\left(-\tilde{\beta}\mathbf{a}_3 + \tilde{\alpha}\mathbf{a}_4\right) & -\tilde{\beta}\mathbf{a}_1 + \tilde{\alpha}\mathbf{a}_2 \end{pmatrix}$$

or by Mx1 block components of the matrix with size *2Mx2:*

$$\mathbf{C} = \begin{pmatrix} -\tilde{\beta}\mathbf{a_1} + \tilde{\alpha}\mathbf{a_2} & \tilde{\alpha}\mathbf{a}_3 + \tilde{\beta}\mathbf{a}_4 \\ \mathbf{\Omega}\left(-\tilde{\beta}\mathbf{a}_3 + \tilde{\alpha}\mathbf{a}_4\right) & \tilde{\alpha}\mathbf{a}_1 + \tilde{\beta}\mathbf{a}_2 \end{pmatrix}$$

or by Mx1 block components of the matrix with size *2Mx2:*

$$\mathbf{C} = \begin{pmatrix} \tilde{\alpha}\mathbf{a_1} + \tilde{\beta}\mathbf{a_2} & \mathbf{\Omega}\left(-\tilde{\beta}\mathbf{a}_3 + \tilde{\alpha}\mathbf{a}_4\right) \\ \tilde{\alpha}\mathbf{a}_3 + \tilde{\beta}\mathbf{a}_4 & -\tilde{\beta}\mathbf{a}_1 + \tilde{\alpha}\mathbf{a}_2 \end{pmatrix}$$

or also by Mx1 block components of the matrix with size *2Mx2:*

$$\mathbf{C} = \begin{pmatrix} -\tilde{\beta}\mathbf{a_1} + \tilde{\alpha}\mathbf{a_2} & \mathbf{\Omega}\left(-\tilde{\beta}\mathbf{a}_3 + \tilde{\alpha}\mathbf{a}_4\right) \\ \tilde{\alpha}\mathbf{a}_3 + \tilde{\beta}\mathbf{a}_4 & \tilde{\alpha}\mathbf{a}_1 + \tilde{\beta}\mathbf{a_2} \end{pmatrix}$$

in which $\mathbf{a_1},\mathbf{a_2},\mathbf{a_3},\mathbf{a_4}$ are said information symbols, $\tilde{\alpha},\tilde{\beta}$ are the scalar coefficients of said first linear combination, $-\tilde{\beta}$, $\tilde{\alpha}$ are the scalar coefficients of said second linear combination, $M$ is the order of the PPM modulation and $\Omega$ is an *MxM* cyclic permutation matrix, subjected or not to a sign inversion of one or a plurality of its coefficients ($\chi_i$).

4. Method for transmitting a plurality of information symbols belonging to a PPM modulation constellation or a PPM-PAM composite modulation constellation having a number of time positions greater than or equal to 3, **characterised in that** said information symbols are coded using the space-time coding system according to one of the previous claims to supply said first, second, third and fourth vectors, the components of each of these vectors modulating the position or the position and amplitude of pulses forming a pulse UWB signal to obtain four modulated pulse UWB signals, these four signals being transmitted by a first and a second radiation elements during a first and a second transmission intervals respectively.

**5.** Transmission method according to claim 4, **characterised in that** the radiation elements are UWB antennas.

**6.** Transmission method according to claim 4, **characterised in that** the radiation elements are laser diodes or light emitting diodes.

**7.** Method according to one of claims 4 to 6 **characterised in that** said pulse UWB signal is a TH-UWB signal.

**8.** Method according to one of claims 4 to 6 **characterised in that** said pulse UWB signal is a DS-UWB signal.

**9.** Method according to one of claims 4 to 6 **characterised in that** said pulse UWB signal is a TH-DS-UWB signal.

**10.** Space-time coding system to implement the method according to one of claims 1 to 3, **characterised in that** it comprises:

- input memory elements (510) to store four information symbols, each information symbol being composed of $M$ components where $M \geq 3$, each component having $M'$ possible values where $M' \geq 1$ ;
- a first plurality of first modules (520) each receiving a component of a first information symbol and a component of the same rank of a second information symbol, each module performing said first and second linear combinations of said components to provide a first and a second output values;
- a second plurality of second modules (525) each receiving a component of a third information symbol and a component of the same rank of a fourth information symbol, each module performing said first and second linear combinations of said components to provide a first and a second output values;
- output memory elements (530) to store the first and second output values of the first and second modules respectively;
- means for permuting write or read addresses of one of the output elements according to a cyclic permutation of order $M$.

**Patentansprüche**

**1.** Verfahren zur räumlich-zeitlichen Kodierung für ein UWB-Übertragungssystem, das zwei Strahlungselemente umfaßt, wobei das Verfahren einen Block von Informationssymbolen (S=($a_1$, $a_2$, $a_3$, $a_4$)), der zu einer PPM-Modulationskonstellation oder zu einer PPM-PAM-Verbundmodulationskonstellation gehört, die eine Zahl von zeitlichen Positionen größer oder gleich 3 aufweist, in eine Sequenz von Vektoren ( $\mathbf{C}_1^0, \mathbf{C}_2^0, \mathbf{C}_1^1, \mathbf{C}_2^1$) kodiert, wobei die Komponenten eines Vektors dazu ausgelegt sind, ein UWB-Pulssignal für ein Strahlungselement des Systems und für ein gegebenes Übertragungsintervall ($T_f$) (zu modulieren, **dadurch gekennzeichnet, dass** ein erster und ein zweiter der Vektoren erhalten werden mittels einer ersten Linearkombination eines ersten und eines zweiten Paares der Symbole, und dass ein dritter und ein vierter der Vektoren erhalten werden mittels einer zweiten Linearkombination des ersten und des zweiten Paares der Symbole, wobei die erste und die zweite Linearkombination skalare Koeffizienten ($\tilde{\alpha}, \tilde{\beta}, -\tilde{\beta}, \tilde{\alpha}$) verwenden, deren jeweilige Verhältnisse im Wesentlichen gleich dem goldenen Schnitt und seinem Gegenteil sind, wobei einer der Vektoren ferner eine zyklische Vertauschung seiner Komponenten erfährt, bevor das UWB-Pulssignal moduliert wird.

**2.** Verfahren zur räumlich-zeitlichen Kodierung nach Anspruch 1, **dadurch gekennzeichnet, dass** der Vektor, der die zyklische Vertauschung erfahren hat, einer Invertierung einer oder mehrerer seiner Komponenten unterworfen wird, bevor das UWB-Pulssignal moduliert wird.

**3.** Verfahren zur räumlich-zeitlichen Kodierung nach Anspruch 1, **dadurch gekennzeichnet, dass** die Vektoren durch die Blockkomponenten Mx1 der Matrix der Dimension 2Mx2 definiert sind:

$$C = \begin{pmatrix} \tilde{\alpha}\mathbf{a}_1 + \tilde{\beta}\mathbf{a}_2 & \tilde{\alpha}\mathbf{a}_3 + \tilde{\beta}\mathbf{a}_4 \\ \Omega\left(-\tilde{\beta}\mathbf{a}_3 + \tilde{\alpha}\mathbf{a}_4\right) & -\tilde{\beta}\mathbf{a}_1 + \tilde{\alpha}\mathbf{a}_2 \end{pmatrix}$$

oder durch die Blockkomponenten Mx1 der Matrix der Dimension 2Mx2:

$$C = \begin{pmatrix} -\tilde{\beta}\mathbf{a}_1 + \tilde{\alpha}\mathbf{a}_2 & \tilde{\alpha}\mathbf{a}_3 + \tilde{\beta}\mathbf{a}_4 \\ \Omega\left(-\tilde{\beta}\mathbf{a}_3 + \tilde{\alpha}\mathbf{a}_4\right) & \tilde{\alpha}\mathbf{a}_1 + \tilde{\beta}\mathbf{a}_2 \end{pmatrix}$$

oder durch die Blockkomponenten Mx1 der Matrix der Dimension 2Mx2:

$$C = \begin{pmatrix} \tilde{\alpha}\mathbf{a}_1 + \tilde{\beta}\mathbf{a}_2 & \Omega\left(-\tilde{\beta}\mathbf{a}_3 + \tilde{\alpha}\mathbf{a}_4\right) \\ \tilde{\alpha}\mathbf{a}_3 + \tilde{\beta}\mathbf{a}_4 & -\tilde{\beta}\mathbf{a}_1 + \tilde{\alpha}\mathbf{a}_2 \end{pmatrix}$$

oder auch durch die Blockkomponenten Mx1 der Matrix der Dimension 2Mx2:

$$C = \begin{pmatrix} -\tilde{\beta}\mathbf{a}_1 + \tilde{\alpha}\mathbf{a}_2 & \Omega\left(-\tilde{\beta}\mathbf{a}_3 + \tilde{\alpha}\mathbf{a}_4\right) \\ \tilde{\alpha}\mathbf{a}_3 + \tilde{\beta}\mathbf{a}_4 & \tilde{\alpha}\mathbf{a}_1 + \tilde{\beta}\mathbf{a}_2 \end{pmatrix}$$

wobei $\mathbf{a}_1$, $\mathbf{a}_2$, $\mathbf{a}_3$, $\mathbf{a}_4$ die Informationssymbole sind, $\tilde{\alpha}$, $\tilde{\beta}$ die skalaren Koeffizienten der ersten Linearkombination sind, $-\tilde{\beta}$, $\tilde{\alpha}$ die skalaren Koeffizienten der zweiten Linearkombination sind, M die Ordnung der PPM-Modulation ist, und $\Omega$ eine MxM-Matrix der zyklischen Vertauschung ist, die wohl oder nicht eine Vorzeicheninvertierung eines oder mehrerer ihrer Koeffizienten ($\chi_i$) erfahren hat.

4. Verfahren zur Übertragung einer Mehrzahl von Informationssymbolen, die zu einer PPM-Modulationskonstellation oder zu einer PPM-PAM-Verbundmodulationskonstellation gehören, die eine Zahl von zeitlichen Positionen größer oder gleich 3 aufweist, **dadurch gekennzeichnet, dass** die Informationssymbole mittels der räumlich-zeitlichen Kodierung nach einem der vorhergehenden Ansprüche kodiert werden, um den ersten, den zweiten, den dritten und den vierten Vektor zu liefern, wobei die Komponenten jedes dieser vier Vektoren die Position oder auch die Position und die Amplitude der Pulse modulieren, aus denen ein UWB-Pulssignal zusammengesetzt ist, um vier modulierte UWB-Pulssignale zu erhalten, wobei diese vier Signale jeweils durch ein erstes und ein zweites Strahlungselement während eines ersten und eines zweiten Übertragungsintervalls übertragen werden.

5. Verfahren zur Übertragung nach Anspruch 4, **dadurch gekennzeichnet, dass** die Strahlungselemente UWB-Antennen sind.

6. Verfahren zur Übertragung nach Anspruch 4, **dadurch gekennzeichnet, dass** die Strahlungselemente Laserdioden oder Elektrolumineszenzdioden sind.

7. Verfahren nach einem der Ansprüche 4 bis 6, **dadurch gekennzeichnet, dass** das Pulssignal ein TH-UWB-Signal ist.

8. Verfahren nach einem der Ansprüche 4 bis 6, **dadurch gekennzeichnet, dass** das Pulssignal ein DS-UWB-Signal ist.

9. Verfahren nach einem der Ansprüche 4 bis 6, **dadurch gekennzeichnet, dass** das Pulssignal ein TH-DS-UWB-Signal ist.

**10.** Vorrichtung zur räumlich-zeitlichen Kodierung zur Durchführung des Verfahrens nach einem der Ansprüche 1 bis 3, **dadurch gekennzeichnet, dass** sie umfaßt:

- Eingangsspeicherelemente (510) zum Speichern von vier Informationssymbolen, wobei jedes Informationssymbol aus M Komponenten mit M$\geq$3 zusammengesetzt ist, wobei jede Komponente M' Werte annehmen kann, wobei M'$\geq$1;

- eine erste Mehrzahl von ersten Modulen (520), die jeweils eine Komponente eines ersten Informationssymbols und eine Komponente gleichen Rangs eines zweiten Informationssymbols empfangen, wobei jedes Modul die erste und die zweite Linearkombination der Komponenten durchführt, um einen ersten und einen zweiten Ausgangswert zu liefern;

- eine zweite Mehrzahl von zweiten Modulen (525), die jeweils eine Komponente eines dritten Informationssymbols und eine Komponente gleichen Rangs eines vierten Informationsymbols empfangen, wobei jedes Modul die erste und die zweite Linearkombination der Komponenten durchführt, um einen ersten und einen zweiten Ausgangswert zu liefern;

- Ausgangsspeicherelemente (530), um jeweils die ersten und die zweiten Ausgangswerte des ersten und des zweiten Moduls zu speichern;

- Mittel zum Vertauschen der Schreib- oder der Leseadressen eines der Ausgangselemente gemäß einer zyklischen Vertauschung der Ordnung M.

EP 2 005 608 B1

$$\mathbf{S} = (a_1,.....,a_b) \quad \mathbf{C} = \begin{pmatrix} c_{1,1} & c_{1,2} & ... & c_{1,P} \\ c_{2,1} & c_{2,2} & ... & c_{2,P} \\ \vdots & \vdots & \ddots & \vdots \\ c_{T,1} & c_{T,2} & ... & c_{T,P} \end{pmatrix}$$

FIG. 1

EP 2 005 608 B1

$T_c$

$T_s$

$c_k(n) = 7,1,4,7$

TH-UWB

# FIG. 2A

$b_n^{(k)} = +1,-1,+1,-1$

DS-UWB

# FIG. 2B

TH-DS-UWB

# FIG. 2C

PAM $M'$

3 •  •  •  •

$(d,a)$

1 •  •  •  •

-1 •  •  •  •

-3 •  •  •  •

$M$

0  1  2  3  PPM

# FIG. 3

400

430

410

$c_1^0, c_1^1$

420

$S = (a_1, a_2, a_3, a_4)$

$$C = \begin{pmatrix} \widetilde{\alpha}\mathbf{a}_1 + \widetilde{\beta}\mathbf{a}_2 & \widetilde{\alpha}\mathbf{a}_3 + \widetilde{\beta}\mathbf{a}_4 \\ \Omega\left(\widetilde{\beta}\mathbf{a}_3 + \widetilde{\alpha}\mathbf{a}_4\right) & -\widetilde{\beta}\mathbf{a}_1 + \widetilde{\alpha}\mathbf{a}_2 \end{pmatrix}$$

435

$c_2^0, c_2^1$

425

# FIG. 4

FIG. 5

520,525

$X = \tilde{\alpha}x + \tilde{\beta}y$

$Y = -\tilde{\beta}x + \tilde{\alpha}y$

# FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J-C Belfiore et al.** The Golden code : a 2x2 full-rate space-time code with non-vanishing determinants. *IEEE Transactions on Information Theory,* Avril 2005, vol. 51 (4), 1432-1436

- **Chadi Abou-Rjeily et al.** Space-Time coding for multiuser Ultra-Wideband communications. *IEEE Transactions on Communications,* Septembre 2005, www.tsi.enst.fr.